# EUROPEAN PATENT APPLICATION

(11) **EP 4 686 403 A1**
(43) Date of publication of application: **04.02.2026**
(21) Application number: 24192544.5
(22) Date of filing: 02.08.2024
(51) Int. Cl.: A01K 35/00

(54) **RACING PIGEON FOOT RING SHELL**

(71) Applicant: Min Xin Technology Corp., Taichung City (TW)
(72) Inventor: Kao, Shu-Hui, Taichung City (TW)
(74) Representative: Petraz, Gilberto Luigi

(57) **Abstract**

A racing pigeon foot ring shell (1) comprises a body (10) and a movable member (20). A first terminal (11) of the body (10) is formed with at least one pivoting hole (110), and a second terminal (12) opposite to the first terminal (11) is formed with a first engaging portion (120). A pivoting terminal (21) of the movable member (20) is formed with at least one protruding pivot (210), and the at least one protruding pivot (210) is detachably inserted into the at least one pivoting hole (110) to be pivotally connected with the body (10). An engaging terminal (22) opposite to the pivoting terminal (21) is formed with a second engaging portion (220), and the second engaging portion (220) is detachably engaged with the first engaging portion (120). The body (10) and the movable member (20) can form a pivoting connection without an additional metal pivot.

## Description

### 1. Field of the Invention

The present invention relates to a field of pigeon racing, especially a racing pigeon foot ring shell.

### 2. Description of the Related Art

Among various bird species, pigeons have special faculties that allow them to travel between two distant points after training. In ancient times, trained pigeons could be adapted as a way of transmitting information (i.e. homing pigeons). In modern times, the special faculties of pigeons to travel long distances are adapted to hold competitions. A way of the competitions is to set a racing pigeon ring on each participating pigeon. The racing pigeon ring is provided with a positioning element that can record a flight path of the participating pigeon from a starting position to a finishing position. Subsequently, an organizer of the competitions reads information in the positioning element of each racing pigeon foot ring to determine which participating pigeon flies to the finishing position fastest.

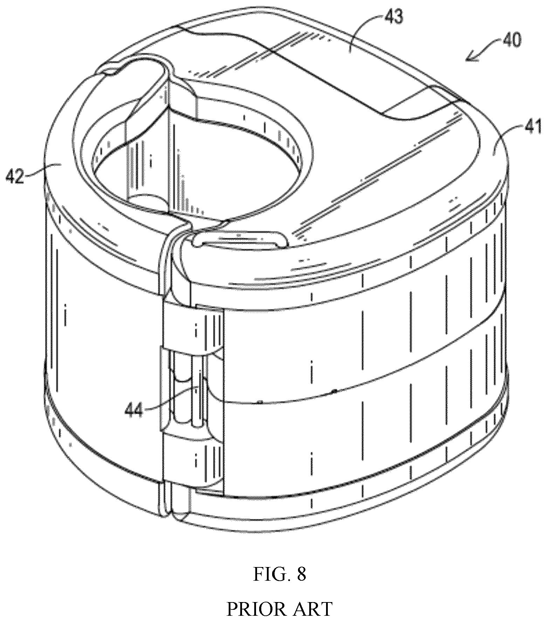

Referring to Fig. 8, a conventional racing pigeon foot ring shell 40 comprises a body 41, a movable member 42, and a battery case 43. The movable member 42 is detachably mounted on the body 41 through a metal pivot 44, and the battery case 43 is also detachably mounted on the body 41. The battery case 43 is adapted to place a battery. When the conventional racing pigeon foot ring shell 40 is to be assembled to form a racing pigeon foot ring, assemblers need to first set electronic components in the body 41 and set the battery in the battery case 43, and then combine the battery case 43 containing the battery with the body 41, and pivotally mount the movable member 42 on the body 41 through the metal pivot 44. The entire assembly process mentioned above has the shortcoming of complicated steps.

Furthermore, the racing pigeon foot rings are always designed to be lightweight so as to mitigate affecting flying performance of racing pigeons equipped with the racing pigeon foot rings as much as possible. However, the conventional racing pigeon foot ring shell 40 requires the metal pivot 44 to fix the body 41 and the movable member 42. In addition to increasing an overall weight of the conventional racing pigeon foot ring shell 40, the metal pivot 44 also increases an overall cost of the conventional racing pigeon foot ring shell 40. Therefore, the conventional racing pigeon foot ring shell 40 must be improved.

The body and the movable member in the conventional racing pigeon foot ring are pivotally connected through the metal pivot, and the metal pivot increases an overall weight and manufacturing cost of the conventional racing pigeon foot ring. To overcome the aforementioned issue, the present invention provides a racing pigeon foot ring shell comprising:
a body having a first terminal and a second terminal opposite each other, the first terminal formed with at least one pivoting hole, and the second terminal formed with a first engaging portion; and
a movable member having a pivoting terminal and an engaging terminal opposite each other, the pivoting terminal formed with at least one protruding pivot, the at least one protruding pivot detachably inserted into the at least one pivoting hole to be pivotally connected with the body, the engaging terminal formed with a second engaging portion, and the second engaging portion detachably engaged with the first engaging portion.

The movable member of the present invention has a pivot structure (i.e. the at least one protruding pivot), so that the body and the movable member can form a pivoting connection without an additional metal pivot. Compared with the prior art, the racing pigeon foot ring shell of the present invention reduces number of overall components, which not only reduces the steps in an assembly process, but also reduces the weight of the racing pigeon foot ring shell, thereby saving manufacturing time and costs.

### IN THE DRAWINGS

Fig. 1 is a perspective view of a racing pigeon foot ring shell in accordance with the present invention;
Fig. 2 is an exploded view of the racing pigeon foot ring shell in Fig. 1;
Fig. 3 is an enlarged perspective view of a movable member of the racing pigeon foot ring shell in Fig. 1;
Fig. 4 is a top side view of the racing pigeon foot ring shell in Fig. 1, wherein a body is connected with the movable member;
Fig. 5 is an enlarged cross-sectional side view in partial section of the racing pigeon foot ring shell in Fig. 4;
Fig. 6 is a schematic view of assembly processes of the racing pigeon foot ring shell in Fig. 1;
Fig. 7 is a top side view of the racing pigeon foot ring shell of the present invention, wherein the body is connected with another movable member having a different inner wall curvature; and
Fig. 8 is a perspective view of a racing pigeon foot ring shell in accordance with the prior art.

In order to understand the technical characteristics and practical effects of the prevent invention in detail, and accomplish them according to the content of the present invention, the detailed description is as follows with the embodiments shown in the figures.

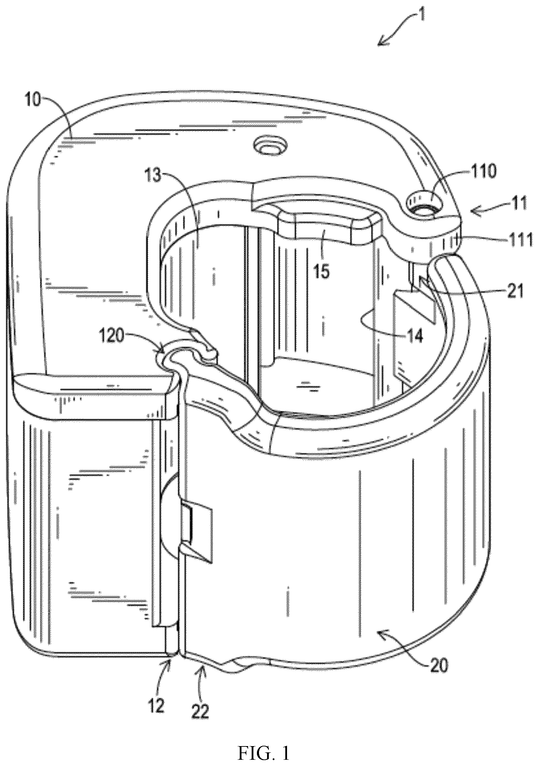

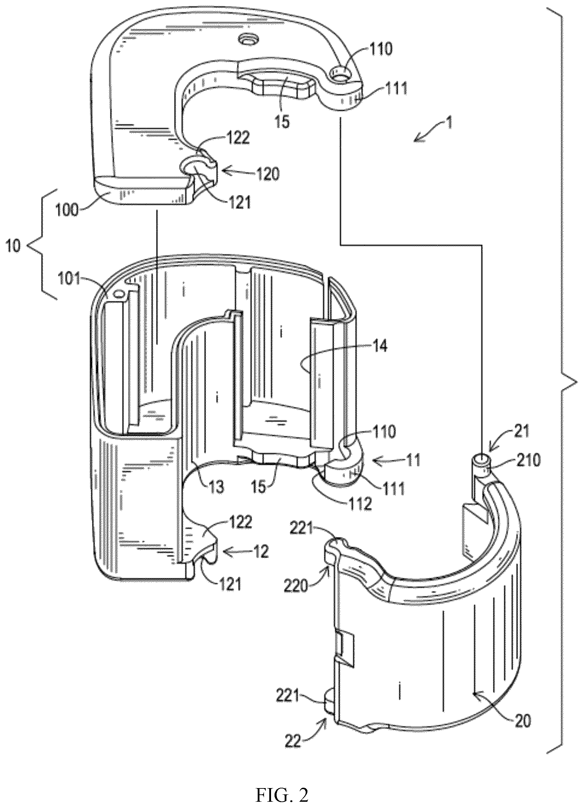

Referring to Fig. 1, a racing pigeon foot ring shell 1 of the present invention comprises a body 10 and a movable member 20. The body 10 has a first terminal 11 and a second terminal 12 opposite to each other. In particular, with reference to Fig. 2, the body 10 is composed of a detachable top cover 100 and a bottom shell 101. An inner space of the bottom shell 101 can be used to place electronic components such as a positioning chip, a battery, etc. In order to ensure that when the racing pigeon foot ring shell 1 is assembled into a racing pigeon foot ring, the electronic components can be operated normally. When the electronic components aforementioned are mounted in the body 10, the top cover 100 and the bottom shell 101 can be bonded through a waterproof adhesive.

The first terminal 11 of the body 10 is formed with at least one pivoting hole 110, and the second terminal 12 has a first engaging portion 120. The movable member 20 is detachably inserted into the at least one pivoting hole 110 to be pivotally connected with the body 10. With reference to Figs. 2 to 5, the movable member 20 can be an arc-shaped movable member 20. The movable member 20 has a pivoting terminal 21 and an engaging terminal 22 opposite to each other. The pivoting terminal 21 is formed with at least one protruding pivot 210. The at least one protruding pivot 210 is detachably inserted into the at least one pivoting hole 110 to be pivotally connected with the body 10. The engaging terminal 22 is formed with a second engaging portion 220. The second engaging portion 220 is detachably engaged with the first engaging portion 120. When the movable member 20 is pivotally mounted on the body 10 and the second engaging portion 220 is engaged with the first engaging portion 120, an annular installation space is formed between the movable member 20 and the body 10 for installation on a foot of a racing pigeon.

In an embodiment of the present invention, the body 10 has two said pivoting holes 110, and the pivoting terminal 21 has two said protruding pivots 210. Openings of the two said pivoting holes 110 correspond to each other, and positions of the two said protruding pivots 210 also correspond to each other. For example, an opening direction of one of the two said pivoting holes 110 is upward, and the opening direction of the other one of the two said pivoting holes 110 is downward. Therefore, when one of the two said protruding pivots 210 is inserted into the pivoting hole 110 with the opening upward, the other one of the two said protruding pivots 210 can be inserted into the pivoting hole 110 with the opening downward, and the movable member 20 pivots through the two said protruding pivots 210 as a rotating axle.

In the present embodiment, the body 10 has an inner arc-shaped surface 13, and two pivoting wings 111 are formed on the inner arc-shaped surface 13 adjacent to the first terminal 11. The two pivoting wings 111 are respectively located on two opposite sides of the first terminal 111, and each of the pivoting wings 111 is formed with a respective one of the said pivoting holes 110. For example, the two pivoting wings 111 are respectively formed on the top cover 100 and the bottom shell 101 of the body 10. When the top cover 100 and the bottom shell 101 are combined, the position of the pivoting wing 111 on the top cover 100 corresponds to the position of the pivoting wing 111 on the bottom shell 101. Therefore, the openings of the two said pivoting holes 110 are aligned to each other, so that the two said protruding pivots 210 of the movable member 20 can be pivotally mounted.

In an embodiment of the present invention, the first engaging portion 120 can be two engaging recesses 121. In particular, as shown in Fig. 2, each of the engaging recesses 121 has a first opening and a second opening. The first opening is located at an end of each of the engaging recesses 121, and the second opening is located at a side of the corresponding engaging recess 121. The first opening fluidly communicates with the second opening. Users can operate the movable member 20 to insert the second engaging portion 220 into the engaging recess 121 through the second opening to engage. The first opening reduces a precision level for inserting the second engaging portion 220 into the corresponding engaging recess 121, allowing users to easily engage and combine the movable member 20 with the body 10.

With reference to Fig. 2, the two engaging recesses 121 are respectively mounted on an engaging wing 122. Specifically, two engaging wings 122 are formed on the inner arc-shaped surface 13 adjacent to the second terminal 12 of the body 10. The two engaging wings 122 are respectively located on two opposite sides of the second terminal 122, and each of the engaging wings 122 is formed with a respective one of the engaging recesses 121. For example, the two engaging wings 122 are respectively formed on the top cover 100 and the bottom shell 101 of the body 10. When the top cover 100 and the bottom shell 101 are combined, the position of the engaging wing 122 on the top cover 100 corresponds to the position of the engaging wing 122 on the bottom shell 101, so that the second engaging portion 220 of the movable member 20 can be engaged.

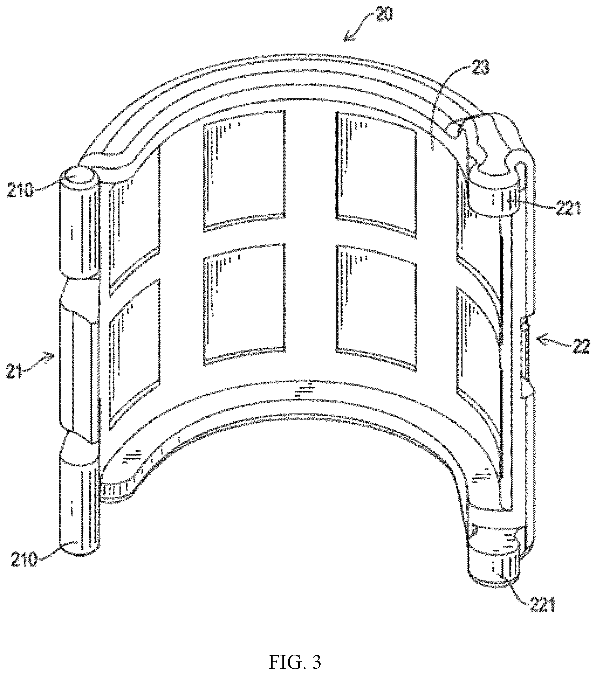

In the present embodiment, as shown in Fig. 3, the second engaging portion 220 of the movable member 20 is two engaging buckles 221. The two engaging buckles 221 are respectively formed on two opposite sides of the engaging terminal 22. The two engaging buckles 221 are respectively and detachably engaged with the two engaging recesses 121. In particular, the two engaging buckles 221 are respectively located on a top side and a bottom side of the engaging terminal 22. When the movable member 20 is pivotally mounted on the body 10, the positions of the two engaging buckles 221 are respectively corresponding to the positions of the two engaging recesses 121, so that the two engaging buckles 221 can be respectively engaged with the two engaging recesses 121 according to operations of the users.

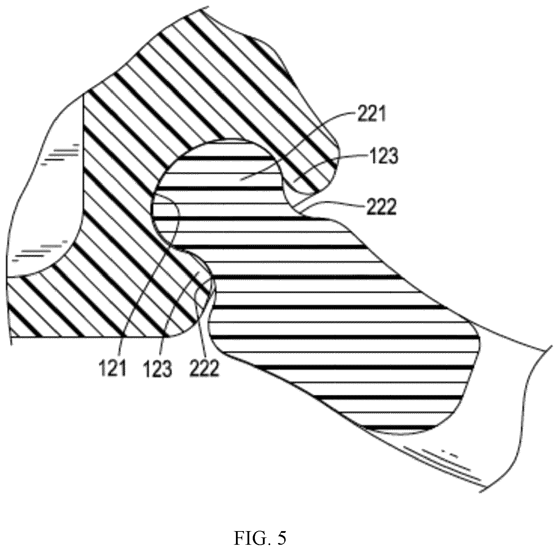

With reference to Fig. 5, in the present embodiment, two convex portions 123 are formed at the opening of each of the engaging recess 121, and two concave portions 222 are formed at each of the engaging buckles 221. When the two engaging buckles 221 are respectively engaged and combined with the two engaging recesses 121, the two convex portions 123 of each of the engaging recesses 121 respectively match the two concave portions 222 of each of the engaging buckles 221 with corresponding concave and convex shapes. Specifically, one side of the second opening of each of the engaging recesses 121 is formed with one of the two convex portions 123, and the other side of the second opening is formed with the other one of the two convex portions 123. The positions of the two convex portions 123 are relative to each other. When each of the engaging buckles 221 is to be inserted into each of the engaging recesses 121, the two convex portions 123 need to be deformed through the engaging buckle 221, so that the engaging buckle 221 enters the second opening. After each of the engaging buckles 221 is inserted into each of the engaging recesses 121, the two concave portions 222 of each of the engaging buckles 221 provide space for accommodating the two convex portions 123 to be accommodated. Thereby, stability of engagement between the movable member 20 and the body 10 is improved through the concave-convex matching of the two convex portions 123 and the two concave portions 222.

With reference to Figs. 1 and 2, in the embodiment of the present invention, an opening 14 is formed on the inner arc-shaped surface 13 adjacent to the first terminal 11. The body 10 has an accommodating space as mentioned above, and the opening 14 communicates with the accommodating space. When the aforementioned electronic components are installed in the accommodating space, connectors of the electronic components can be exposed through the opening 14. Therefore, another external electronic device (such as a charging device) can be connected with the electronic components inside the body 10. In the present embodiment, two fixing wings 15 can also be formed on the inner arc-shaped surface 13 adjacent to the opening 14. The two fixing wings 15 are respectively located on two opposite sides of the opening 14. For example, the aforementioned charging device has a corresponding recessed structure. When the body 10 is connected to the charging device, the combination stability of the body 10 with the charging device can be improved through corresponding cooperation between the two fixing wings 15 and the recessed structure.

In order to reduce an impact on the flying performance of a racing pigeon wearing the racing pigeon foot ring shell 1, as shown in Fig. 3, a plurality of ribs 23 are formed on an inner wall of the movable member 20. The plurality of ribs 23 provide sufficient support for other materials on the movable member 20, so that material required for forming the movable member 20 can be reduced. Reducing the material required to form the movable member 20 not only reduces an overall weight of the racing pigeon foot ring shell 1 to achieve lightweight effect, but also reduces manufacturing costs.

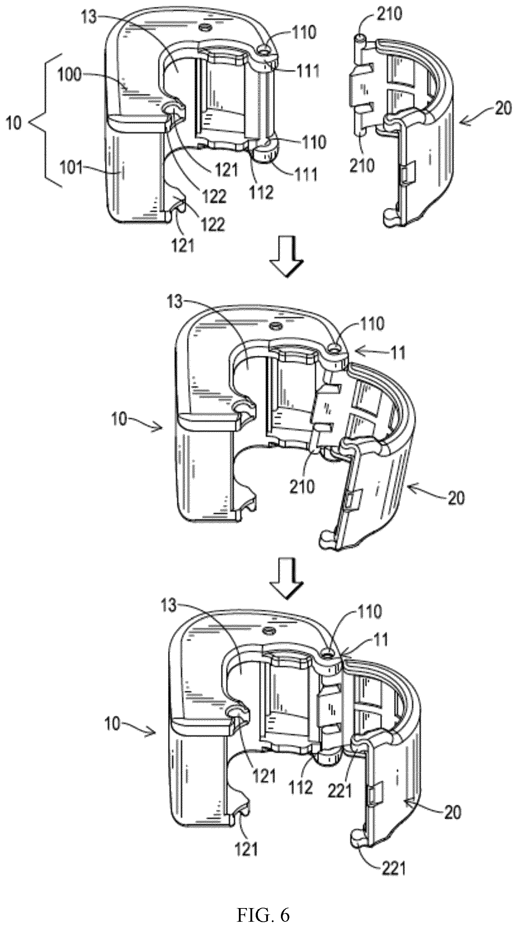

Furthermore, in order to facilitate users to assemble the movable member 20 on the body 10, one of the two pivoting wings 111 is formed with a lateral opening 112. The lateral opening 112 communicates with the pivoting hole 110 on the pivoting wing 111. For example, as shown in Fig. 2, the lateral opening 112 is formed on the pivoting wing 111 on the bottom shell 101. The lateral opening 112 communicates with the pivoting hole 110 located on the bottom side of the first terminal 11. As shown in Fig.6, one of the two protruding pivots 210 on the movable member 20 can be inserted into the lateral opening 112 and then into the corresponding pivot hole 110 to form a pivot arrangement.

To elaborate specifically how the movable member 20 is assembled on the body 10, explanations are as follows with schematic diagrams of assembling processes.

Please refer to Fig. 2 and Fig. 6. First, the top cover 100 and the bottom shell 101 are assembled and combined to form the body 10 as shown in Fig. 2, so that the position of the pivoting wing 111 (pivoting hole 110) on the top cover 100 corresponds to the position of the pivoting wing 111 (pivoting hole 110) on the bottom shell 101, and the position of the engaging wing 122 on the top cover 100 corresponds to the position of the engaging wing 122 on the bottom shell 101. A method of combining the top cover 100 and the bottom shell 101 is as mentioned above. When the electronic components aforementioned are mounted in the body 10, the top cover 100 and the bottom shell 101 can be bonded through a waterproof adhesive.

Next, as shown in Fig. 6, one of the two protruding wings 210 of the movable member 20 is inserted into one of the two pivoting holes 110. For example, because the lateral opening 112 is formed on the pivoting wing 111 on the bottom shell 101 as mentioned above, the inner wall of the movable member 20 can first correspond to the inner arc-shaped surface 13 of the body 10, and then insert the protruding wing 210 located on the top side of the pivoting terminal 21 into the pivoting hole 110 located on the top side of the first terminal 11.

Then, the protruding wing 210 located on the bottom side of the pivoting terminal 21 is inserted into the pivoting hole 110 located on the bottom side of the first terminal 11 through the lateral opening 112, so that the movable member 20 can pivot relative to the body 10 through the two protruding wings 210. The two engaging wings 221 and the two engaging recesses 121 are engaged and combined according to operations of the users to control whether an annular installation space is formed between the movable member 20 and the body 10.

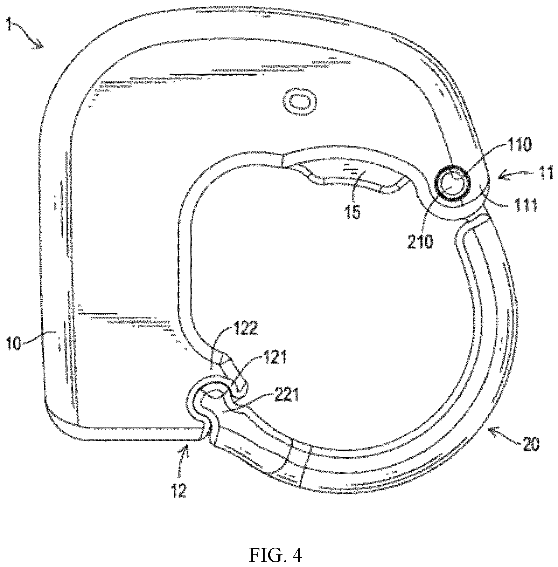

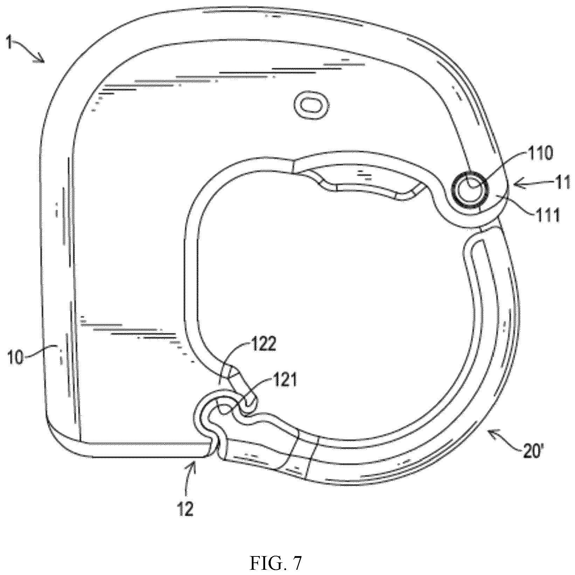

Furthermore, the movable member 20 of the racing pigeon foot ring shell 1 can be replaced to adjust inner wall curvatures thereof according to foot sizes of the racing pigeon. With reference to Figs. 4 and 5, the movable member 20 shown in Fig. 4 and a movable member 20' shown in Fig. 7 differ in the inner wall curvature of the movable member 20'. In other words, the size of the annular installation space formed between the movable member 20' and the body 10 is different from the size of the annular installation space formed between the movable member 20 and the body 10. Therefore, the racing pigeon foot ring shell 1 can be equipped on feet of racing pigeons of different sizes and has greater flexibility and practicality in use.

With the abovementioned technical features, the racing pigeon foot ring shell 1 of the present invention comprises a body 10 and a movable member 20. A first terminal 11 of the body 10 is formed with at least one pivoting hole 110, and a second terminal 12 opposite to the first terminal 11 is formed with a first engaging portion 120. A pivoting terminal 21 of the movable member 20 is formed with at least one protruding pivot 210, and the at least one protruding pivot 210 is detachably inserted into the at least one pivoting hole 110 to be pivotally connected with the body 10. An engaging terminal 22 opposite to the pivoting terminal 21 is formed with a second engaging portion 220, and the second engaging portion 220 is detachably engaged with the first engaging portion 120. A pivot structure of the present invention (the at least one protruding pivot 210) is formed on the movable member 20, so that the body 10 and the movable member 20 can form a pivoting connection without an additional metal pivot. Compared with the prior art, the racing pigeon foot ring shell 1 of the present invention reduces number of overall components and reduces the steps of assembly. In this way, the overall weight of the racing pigeon foot ring shell 1 can be reduced, thereby saving manufacturing costs.

The above only records the implementations or embodiments of the technical artifices adopted by the present invention to solve the problems, and is not configured to limit the claims of the present invention. That is, all equivalent changes and modifications that are consistent with the meaning of the claims of the present invention or made in accordance with the claims of the present invention are covered by the claims of the present invention.

## Claims

1. A racing pigeon foot ring shell (1), **characterized in that** the racing pigeon foot ring shell (1) comprises:
a body (10) having a first terminal (11) and a second terminal (12) opposite each other, the first terminal (11) formed with at least one pivoting hole (110), and the second terminal (12) formed with a first engaging portion (120); and
a movable member (20) having a pivoting terminal (21) and an engaging terminal (22) opposite each other, the pivoting terminal (21) formed with at least one protruding pivot (210), the at least one protruding pivot (210) detachably inserted into the at least one pivoting hole (110) to be pivotally connected with the body (10), the engaging terminal (22) formed with a second engaging portion (220), and the second engaging portion (220) detachably engaged with the first engaging portion (120).

2. The racing pigeon foot ring shell (1) as claimed in claim 1, wherein the body (10) has an inner arc-shaped surface (13), two pivoting wings (111) are formed on the inner arc-shaped surface (13) adjacent to the first terminal (11), the two pivoting wings (111) are respectively located on two opposite sides of the first terminal (11), and each of the pivoting wings (111) is formed with a respective one of the pivoting holes (110).

3. The racing pigeon foot ring shell (1) as claimed in claim 2, wherein one of the two pivoting wings (111) is formed with a lateral opening (112), and the lateral opening (112) communicates with the pivoting hole (110) on said one of the two pivoting wings (111).

4. The racing pigeon foot ring shell (1) as claimed in claim 1, wherein the body (10) has an inner arc-shaped surface (13), the first engaging portion (120) is two engaging recesses (121), two engaging wings (122) are formed on the inner arc-shaped surface (13) adjacent to the second terminal (12), the two engaging wings (122) are respectively located on two opposite sides of the second terminal (12), and each of the engaging wings (122) is formed with a respective one of the engaging recesses (121).

5. The racing pigeon foot ring shell (1) as claimed in claim 4, wherein the second engaging portion (220) is two engaging buckles (221), the two engaging buckles (221) are formed on two opposite sides of the engaging terminal (22), and the two engaging buckles (221) are respectively and detachably engaged with the two engaging recesses (121).

6. The racing pigeon foot ring shell (1) as claimed in claim 5, wherein two convex portions (123) are formed at an opening of each of the engaging recesses (121), two concave portions (222) are formed at each of the engaging buckles (221); when the two engaging buckles (221) are respectively engaged and combined with the two engaging recesses (121), the two convex portions (123) of each of the engaging recesses (121) respectively match the two concave portions (222) of each of the engaging buckles (221) with corresponding concave and convex shapes.

7. The racing pigeon foot ring shell (1) as claimed in claim 1, wherein the body (10) has an inner arc-shaped surface (13), an opening is formed on the inner arc-shaped surface (13) adjacent to the first terminal (11), and an accommodating space is formed in the body (10) and communicates with the opening.

8. The racing pigeon foot ring shell (1) as claimed in claim 7, wherein two fixing wings (15) are formed on the inner arc-shaped surface (13) adjacent to the opening, and the two fixing wings (15) are respectively located on two opposite sides of the opening.

9. The racing pigeon foot ring shell (1) as claimed in claim 1, wherein a plurality of ribs (23) are formed on an inner wall of the movable member (20).

10. The racing pigeon foot ring shell (1) as claimed in claim 1, wherein the movable member (20) is an arc-shaped movable member and is replaceable to adjust inner wall curvatures thereof according to foot sizes of racing pigeons.
